(19) **Europäisches Patentamt / European Patent Office / Office européen des brevets**

(11) **EP 3 502 201 B1**

(12) **EUROPEAN PATENT SPECIFICATION**

(45) Date of publication and mention of the grant of the patent:
**17.03.2021 Bulletin 2021/11**

(21) Application number: **17841483.5**

(22) Date of filing: **14.08.2017**

(51) Int Cl.:
*C09D 5/00* *(2006.01)*　　*C09C 1/62* *(2006.01)*
*C09C 3/06* *(2006.01)*　　*C09D 5/33* *(2006.01)*

(86) International application number:
**PCT/JP2017/029259**

(87) International publication number:
**WO 2018/034261 (22.02.2018 Gazette 2018/08)**

(54) **COATING FILM AND ARTICLE**

BESCHICHTUNGSFILM UND ARTIKEL

FILM DE REVÊTEMENT ET ARTICLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.08.2016 JP 2016160205**

(43) Date of publication of application:
**26.06.2019 Bulletin 2019/26**

(73) Proprietor: **Nippon Paint Holdings Co., Ltd.**
**Osaka-shi, Osaka 531-8511 (JP)**

(72) Inventors:
• **FUJITA Takeshi**
  **Tokyo 140-8675 (JP)**
• **ONISHI Isamu**
  **Tokyo 140-8675 (JP)**
• **ADACHI Yoichi**
  **Tokyo 140-8675 (JP)**

(74) Representative: **Scott, Stephen John**
**YUJA Limited**
**Suite 4, Level 6**
**Broad Gate**
**22-26 The Headrow**
**Leeds LS1 8EQ (GB)**

(56) References cited:
WO-A1-00/69975　　　　WO-A1-00/69975
WO-A1-2016/006664　　WO-A1-2016/006664
WO-A1-2017/122733　　WO-A1-2017/122734
JP-A- 2002 500 258　　JP-A- 2005 298 905
JP-A- 2008 511 704

**Description**

TECHNICAL FIELD

The present disclosure relates to a coating film and an article.

BACKGROUND

Infrared-reflective pigments and infrared-reflective coating compositions that can impart heat insulation property to building roofs or roads and can also be used in applications such as automotive bodies required to have high designability have been proposed in recent years.
PTL1 relates to a scale-like infrared-reflective pigment, comprising a layered body having at least one metal thin film layer and at least two transparent dielectric layers. The metal thin film layer comprises at least one selected from the group consisting of silver, aluminum, copper, gold, palladium, zinc, titanium, chromium, and silicon. The dielectric layers are located on the both sides of the meta layer. The dielectric layers comprise at least one selected from the group consisting of titanium dioxide, zinc oxide, aluminum oxide, zirconium oxide, silicon dioxide, tin oxide, tin-doped indium oxide, and antimony-doped tin oxide.
PTL2 relates to a plurality of dielectric-coated metal flakes comprising a reflector layer and dielectric layers on both sides of the reflector layer. The dielectric layers are formed of a material selected from the group consisting of silicon dioxide, aluminum oxide, zinc oxide, zirconium oxide, cerium oxide, titanium dioxide, etc. The reflector layers are formed of a metal selected from the group consisting of aluminum, copper, silver, gold, platinum, palladium, nickel, cobalt, tin, rhodium, niobium, chromium, and combinations or alloys thereof.

CITATION LIST

Patent Literature

    PTL1: WO 2016/006664 A1
    PTL2: WO 00/69975 A1

SUMMARY

(Technical Problem)

However, our research on the above-mentioned infrared-reflective pigments and infrared-reflective coating compositions has revealed that coating films formed using these materials have excellent infrared light reflectivity and visible light permeability but have room for improvement in radio wave permeability and haze.
It could therefore be helpful to provide a coating film that has high radio wave permeability and low haze in addition to excellent infrared light reflectivity and visible light permeability, and an article comprising such a coating film.

(Solution to Problem)

A coating film according to the present disclosure is a coating film produced using a coating composition, wherein the coating composition comprises flat pigment particles and a resin component, the flat pigment particles comprise a laminate of dielectric layers and a metallic thin film layer, the dielectric layers and the metallic thin film layer are stacked alternately in the laminate, and the dielectric layers are outermost layers of the laminate, an aspect ratio of the flat pigment particles is 75 to 370, the aspect ratio being calculated by dividing an average maximum diameter of the flat pigment particles by an average thickness of the flat pigment particles, a pigment surface density of the flat pigment particles in the coating film is 75 % to 250 %, and a film thickness of the coating film is 1 $\mu$m to 35 $\mu$m. With this structure, a coating film that has high radio wave permeability and low haze in addition to excellent infrared light reflectivity and visible light permeability can be provided.
In one embodiment of the coating film according to the present disclosure, the average maximum diameter of the flat pigment particles is 1000 nm or more.
In one embodiment of the coating film according to the present disclosure, a thickness of the laminate is 30 nm to 115 nm.
In one embodiment of the coating film according to the present disclosure, a thickness of the laminate is 50 nm to 100 nm.

An article according to the present disclosure comprises the coating film described above. An article comprising the coating film that has high radio wave permeability and low haze in addition to excellent infrared light reflectivity and visible light permeability can thus be provided.

(Advantageous Effect)

It is therefore possible to provide a coating film that has high radio wave permeability and low haze in addition to excellent infrared light reflectivity and visible light permeability.

It is also possible to provide an article comprising a coating film that has high radio wave permeability and low haze in addition to excellent infrared light reflectivity and visible light permeability.

BRIEF DESCRIPTION OF THE DRAWINGS

In the accompanying drawings:

FIG. 1 is a schematic diagram illustrating an example of the structure of a flat pigment particle;
FIG. 2 is a schematic diagram illustrating another example of the structure of a flat pigment particle;
FIG. 3 is a schematic diagram illustrating yet another example of the structure of a flat pigment particle;
FIG. 4 is a schematic diagram illustrating an example of a flat pigment particle having a surface tension adjustment layer;
FIG. 5 is a schematic diagram illustrating an example of a flat pigment particle production method; and
FIG. 6 is a schematic diagram illustrating another example of the flat pigment particle production method.

DETAILED DESCRIPTION

Embodiments according to the present disclosure will be described below. The following description is intended for illustrative purposes only, and is not intended to limit the scope of the present disclosure in any way.

In the present disclosure, any combination of two or more embodiments is possible.

In the present disclosure, a flat pigment particle denotes each individual flat or approximately flat substance constituting a pigment.

In the present disclosure, the thickness of a coating film and each type of layer is referred to as "film thickness". The terms "film thickness" and "dry film thickness" other than "optical film thickness" denote physical film thickness unless stated otherwise.

In the present disclosure, a visible light region represents a range of 380 nm to 780 nm in wavelength, a visible light surrounding region represents a range of 180 nm to 980 nm in wavelength, an infrared light wavelength region represents a range of 780 nm to 2,500 nm, and a radio wave wavelength region represents a range of 0.1 mm to 10 km.

(Coating film)

A coating film according to the present disclosure is a coating film produced using a coating composition, wherein the coating composition comprises flat pigment particles and a resin component, the flat pigment particles comprise a laminate of dielectric layers and a metallic thin film layer, the dielectric layers and the metallic thin film layer are stacked alternately in the laminate, and the dielectric layers are outermost layers of the laminate, an aspect ratio of the flat pigment particles is 10 to 400, the aspect ratio being calculated by dividing an average maximum diameter of the flat pigment particles by an average thickness of the flat pigment particles, a pigment surface density of the flat pigment particles in the coating film is 50 % to 300 %, and a film thickness of the coating film is 1 $\mu$m or more. With this structure, a coating film that has high radio wave permeability and low haze in addition to excellent infrared light reflectivity and visible light permeability can be provided.

A coating composition forming the coating film according to the present disclosure will be described and exemplified below.

<Coating composition>

The coating composition comprises flat pigment particles and a resin component. The coating composition may comprise other components in addition to the flat pigment particles and the resin component.

<Flat pigment particles>

The flat pigment particles have a function of imparting infrared light reflectivity and visible light permeability to the coating film. The flat pigment particles include a laminate of dielectric layers and a metallic thin film layer. The dielectric layers and the metallic thin film layer are stacked alternately in the laminate, and the dielectric layers are the outermost layers of the laminate. Hereafter, "laminate" refers to a laminate in which dielectric layers and a metallic thin film layer are stacked alternately and the dielectric layers are the outermost layers.

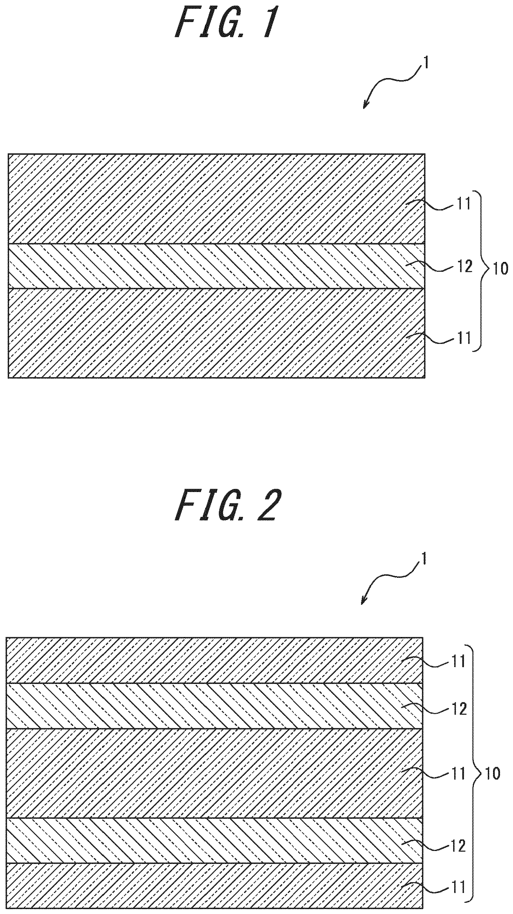

FIG. 1 is a schematic diagram illustrating an example of the structure of a flat pigment particle. The flat pigment particle 1 in FIG. 1 is composed of a laminate 10 of two dielectric layers 11 and one metallic thin film layer 12. A dielectric layer 11, a metallic thin film layer 12, and a dielectric layer 11 are stacked adjacent to each other in this order, as illustrated in FIG. 1. The laminate 10 in FIG. 1 is a laminate made up of fewest components. In the laminate 10 in FIG. 1, the two dielectric layers 11 have the same film thickness.

FIG. 2 is a schematic diagram illustrating another example of the structure of a flat pigment particle. The flat pigment particle 1 in FIG. 2 is composed of a laminate 10 of three dielectric layers 11 and two metallic thin film layers 12. In the laminate 10 in FIG. 2, the outermost two dielectric layers 11 have the same film thickness, and the innermost dielectric layer 11 has greater film thickness than the outermost dielectric layers 11. The two metallic thin film layers 12 have the same film thickness.

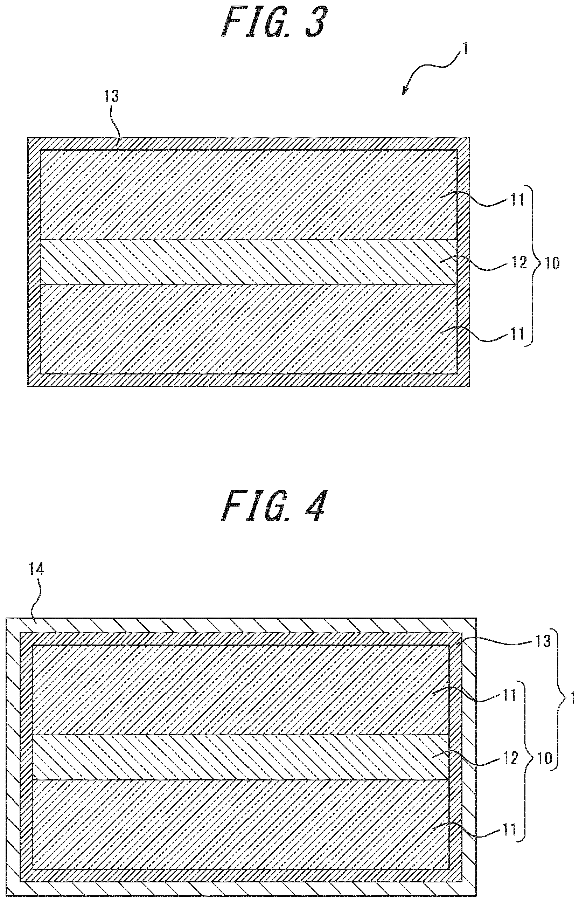

FIG. 3 is a schematic diagram illustrating yet another example of the structure of a flat pigment particle. The flat pigment particle 1 in FIG. 3 has a surface treatment layer 13 on the surface of the laminate 10 in FIG. 1. The surface treatment layer 13 is included in the flat pigment particle 1, but is not included in the laminate 10.

FIG. 4 is a schematic diagram illustrating an example of a flat pigment particle having a surface tension adjustment layer. The flat pigment particle 1 in FIG. 4 has a surface tension adjustment layer 14 on the surface of the flat pigment particle 1 in FIG. 3. The surface tension adjustment layer 14 is not included in the flat pigment particle 1.

The number of layers of the laminate is at least 3, and may be any of other odd numbers such as 5, 7, and 9, given that the dielectric layers and the metallic thin film layer are stacked alternately and the dielectric layers are the outermost layers of the laminate. In one embodiment, the number of layers of the laminate is 3 or 5. In the laminate, the dielectric layers and the metallic thin film layer are stacked alternately, and thus are adjacent to each other.

The laminate is not limited as long as the dielectric layers and the metallic thin film layer are stacked alternately and the dielectric layers are the outermost layers of the laminate as described above. Laminates (flat pigment particles) that are the same in the types (compositions), film thicknesses, and number of layers in the laminate may be used, or laminates (flat pigment particles) that differ in the types (compositions), film thicknesses, and number of layers in the laminate may be used in combination. For example, a flat pigment particle composed of a laminate of three layers (two dielectric layers and one metallic thin film layer) and a flat pigment particle composed of a laminate of five layers (three dielectric layers and two metallic thin film layers) may be used in combination.

The thickness of the laminate may be adjusted as appropriate based on the infrared light reflectivity and the visible light permeability by the dielectric layer and the metallic thin film layer described later, the corresponding electromagnetic wave wavelength regions, and the like. For example, the average thickness of the laminate may be 30 nm to 150 nm. In one embodiment, the average thickness of the laminate is 30 nm to 115 nm. In another embodiment, the average thickness of the laminate is 50 nm to 100 nm. In another embodiment, the laminate is made up of three layers, and the average thickness of the laminate is 30 nm to 100 nm. In yet another embodiment, the laminate is made up of five layers, and the average thickness of the laminate is 50 nm to 150 nm. The average thickness of the laminate can be calculated by the below-described measurement method for the average thickness of the flat pigment particles.

In terms of reducing the haze of the coating film, the average thickness of the laminate is preferably less than the visible light wavelength (380 nm to 780 nm). In view of this, the average thickness of the laminate is preferably less than or equal to half of the visible light wavelength. The average thickness of the laminate is preferably 115 nm or less, more preferably 100 nm or less, and further preferably 80 nm or less.

The dielectric layer, the metallic thin film layer, and the optional surface treatment layer included in the flat pigment particles will be described and exemplified below.

<Dielectric layer>

The dielectric layer functions as an antireflection layer in the visible light surrounding region for the metallic thin film layer. In other words, the dielectric layer has a function of improving the transmittance of incident light in the visible light surrounding region. The dielectric layer imparts excellent visible light permeability to the coating film including the flat pigment particles.

The material of the dielectric layer may be a conventionally known dielectric layer material. Examples of the material of the dielectric layer include titanium dioxide, zinc oxide, aluminum oxide, zirconium oxide, silicon dioxide, tin oxide (IV) ($SnO_2$), tin-doped indium oxide (ITO) and antimony-doped tin oxide (ATO), niobium pentoxide ($Nb_2O_5$), and

cerium oxide (CeO$_2$). These dielectric layer materials may be used alone or in combination of two or more.

In a preferred embodiment, the material of the dielectric layer is one or more selected from the group consisting of tin-doped indium oxide, zinc oxide, titanium oxide, tin oxide (IV), niobium pentoxide, and cerium oxide.

The film thickness of the dielectric layer may be set as appropriate based on the refractive indexes of the dielectric layer and the metallic thin film layer in a range in which the visible light permeability can be enhanced using light interference effect. For example, the film thickness of the dielectric layer is preferably (integral multiple of $\lambda/4n$) $\pm$ 10 nm where $\lambda$ is the wavelength of incident light in the visible light surrounding region and n is the refractive index of the dielectric layer, as described in PTL 1. In terms of visible light transmittance, the integer of the integral multiple is preferably 1 to 4.

In the present disclosure, the refractive index n is determined by ellipsometry measurement. Specifically, the refractive index n is measured at a temperature of 25 °C using an ellipsometer produced by HORIBA, Ltd. or J. A. Woolam Japan.

For example, the refractive indexes of the dielectric layer are as follows: 2.3 for titanium dioxide (TiO$_2$), 1.83 for zinc oxide (ZnO), 1.9 for tin-doped indium oxide (ITO), 2.3 for niobium pentoxide (Nb$_2$O$_5$), and 2.2 for cerium oxide (CeO$_2$). In one embodiment, the refractive index of the dielectric layer is higher than the refractive index of the metallic thin film layer in the laminate.

The film thickness of the dielectric layer is 10 nm or more in one embodiment, 15 nm or more in another embodiment, 18 nm or more in yet another embodiment, and 20 nm or more in yet another embodiment, and is 80 nm or less in one embodiment, 50 nm or less in another embodiment, 40 nm or less in yet another embodiment, and 36 nm or less in yet another embodiment.

In the present disclosure, the dielectric layers are the outermost layers of the laminate, and therefore the number of dielectric layers is at least 2. The materials and film thicknesses of the dielectric layers may be the same or different.

<Metallic thin film layer>

The metallic thin film layer has a function of reflecting infrared light. The metallic thin film layer imparts excellent infrared light reflectivity to the coating film including the flat pigment particles.

The material of the metallic thin film layer may be a conventionally known metallic thin film layer or infrared reflection layer material. Examples of the material of the metallic thin film layer include silver, silver compounds, aluminum, copper, gold, palladium, zinc, titanium, chromium, and silicon. These metallic thin film layer materials may be used alone or in combination of two or more. Herein, "silver compound" refers to a silver compound mainly composed of silver (for example, 50 mass% or more of the composition). Examples of the silver compounds include silver-indium-based alloys, silver-gold-based alloys, and silver-palladium-gold-based alloys.

In a preferred embodiment, the material of the metallic thin film layer is one or more selected from the group consisting of silver, silver compounds, aluminum, zinc, and titanium.

The film thickness of the metallic thin film layer may be set as appropriate based on the refractive indexes of the dielectric layer and the metallic thin film layer in a range in which the infrared light reflectivity can be enhanced. For example, the film thickness of the metallic thin film layer is 5 nm to 20 nm. The film thickness of the metallic thin film layer is 5 nm or more in one embodiment, 8 nm or more in another embodiment, and 10 nm or more in yet another embodiment, and is 20 nm or less in one embodiment, 15 nm or less in another embodiment, and 14 nm or less in yet another embodiment. If the film thickness of the metallic thin film layer is 20 nm or less, the visible light permeability of the coating film is enhanced. If the film thickness of the metallic thin film layer is 5 nm or more, the infrared light reflectivity of the coating film is enhanced.

In the case where the number of metallic thin film layers is 2 or more, the materials and film thicknesses of the metallic thin film layers may be the same or different.

<Surface treatment layer>

The flat pigment particles may optionally have a surface treatment layer on the surface of the laminate, as illustrated in FIG. 3. The surface treatment layer has a function of suppressing degradation of the laminate caused by, for example, the below-described resin component coming into contact with and oxidizing the dielectric layer or the metallic thin film layer including an end of the laminate in the coating film. The coating film thus has excellent weather resistance. The surface treatment layer is provided on at least part of the surface including an end of the laminate, and may be provided on the whole surface of the laminate.

The material of the surface treatment layer may be selected as appropriate from known materials based on the function of the surface treatment layer. Examples of the material of the surface treatment layer include aluminum oxide, silica, and zirconium oxide. These surface treatment layer materials may be used alone or in combination of two or more. In the case where stearic acid is used as the below-described surface tension adjustment layer, aluminum oxide can also function as an adsorptive base for the surface tension adjustment layer.

The film thickness of the surface treatment layer may be adjusted as appropriate based on the function of the surface treatment layer. For example, the film thickness of the surface treatment layer may be 0.5 nm to 15 nm. The film thickness of the surface treatment layer is preferably 1 nm to 10 nm.

<Aspect ratio of flat pigment particles>

In the present disclosure, the aspect ratio of the flat pigment particles (the value obtained by dividing the average maximum diameter of the flat pigment particles by the average thickness of the flat pigment particles) is 10 to 400. As a result of the aspect ratio being 400 or less and the below-described pigment surface density being 300 % or less, the coating film has high radio wave permeability. As a result of the aspect ratio being 10 or more and the pigment surface density being 50 % or more, the coating film has excellent infrared light reflectivity and visible light permeability.

The maximum diameter of each flat pigment particle is the maximum length (major axis) of the flat pigment particle. Specifically, the maximum diameter of each flat pigment particle is determined by combusting the organic material in the coating composition or in the coating film by the same method as used in ash measurement in JIS K 7250-1: 2006 and observing each flat pigment particle included in the combustion residue using a shape analysis laser microscope VK-X 250 produced by Keyence Corporation. The average maximum diameter of the flat pigment particles is the number average of the maximum diameters of 100 randomly selected flat pigment particles included in the combustion residue.

The average maximum diameter of the flat pigment particles is 1000 nm or more in one embodiment, 6000 nm or more in another embodiment, and 10000 nm or more in another embodiment, and is 20000 nm or less in another embodiment.

In terms of reducing the haze of the coating film, the average maximum diameter of the flat pigment particles is preferably more than the visible light wavelength (380 nm to 780 nm). The average maximum diameter of the flat pigment particles is further preferably 6000 nm or more.

The thickness of each flat pigment particle is the length of the flat pigment particle in a direction perpendicular to a plane including the maximum diameter of the flat pigment particle. Specifically, the thickness of each flat pigment particle is determined by combusting the organic material in the coating composition or in the coating film by the same method as used in ash measurement in JIS K 7250-1: 2006 and observing the length of each flat pigment particle included in the combustion residue in a direction perpendicular to a plane including the maximum diameter of the flat pigment particle using a shape analysis laser microscope VK-X 250 produced by Keyence Corporation. The average thickness of the flat pigment particles is the number average of the thicknesses of 100 randomly selected flat pigment particles included in the combustion residue.

The average thickness of the flat pigment particles is 50 nm or more in one embodiment, 80 nm or more in another embodiment, and 95 nm or more in yet another embodiment, and is 150 nm or less in one embodiment, 115 nm or less in another embodiment, 100 nm or less in another embodiment, 95 nm or less in yet another embodiment, and 80 nm or less in yet another embodiment.

In terms of reducing the haze of the coating film, the average thickness of the flat pigment particles is preferably less than the visible light wavelength (380 nm to 780 nm). In view of this, the average thickness of the flat pigment particles is preferably less than or equal to half of the visible light wavelength. The average thickness of the flat pigment particles is preferably 150 nm or less, more preferably 100 nm or less, and further preferably 80 nm or less.

The aspect ratio is 25 or more in one embodiment, 50 or more in another embodiment, 85 or more in yet another embodiment, 100 or more in yet another embodiment, 120 or more in yet another embodiment, 125 or more in yet another embodiment, and 130 or more in yet another embodiment, and is 370 or less in one embodiment, and 250 or less in another embodiment.

In terms of reducing the haze of the coating film, the aspect ratio is preferably 75 or more.

<Flat pigment particle production method>

The flat pigment particle production method is not limited, and may be a conventionally known production method for pigment laminates. For example, the first production method or the second production method described in PTL 1 may be used. As the flat pigment particle production method, wet process of forming the laminate in a solution may be used. An example of the production method by wet process is a method whereby flat metal synthesized by, for example, the method described in JP 2002-004031 A or WO 2015/111095 A1 is subjected to known metal hydrous oxide coating treatment such as neutralization titration or homogeneous precipitation and then burned to coat the flat metal with a dielectric layer. Another example of the production method by wet process is a method whereby a flat alumina particle is coated with a metallic thin film layer by electroless plating process, further subjected to known metal hydrous oxide coating treatment such as neutralization titration or homogeneous precipitation, and then burned to coat it with a dielectric layer. Moreover, the laminate of the metallic layer and the dielectric layer produced by the above-described method may be, after a surface treatment layer is formed thereon according to need, ground and used as flat pigment particles by wet process, as in the below-described first production method. The below-described surface tension adjustment layer may be formed on the surfaces of the flat pigment particles according to need. The first production method and the second production method will be described and exemplified below.

<First production method>

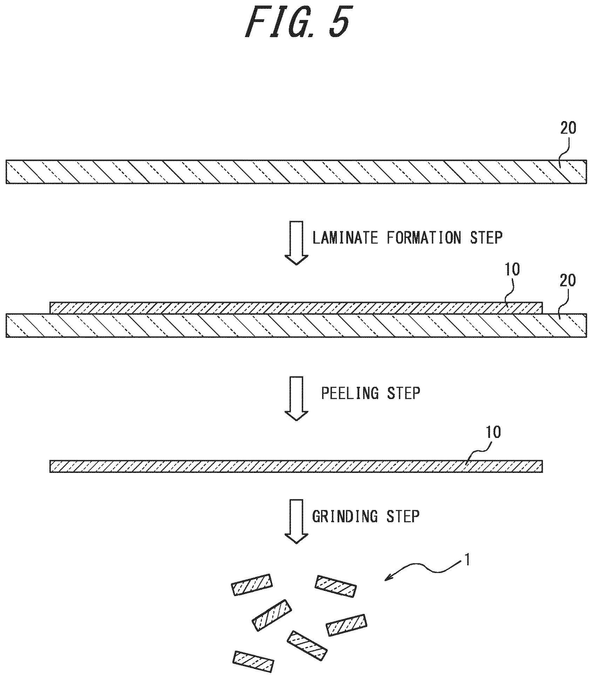

FIG. 5 is a schematic diagram illustrating the first production method as an example of the flat pigment particle production method. In this example, the production method for flat pigment particles 1 includes: a step of forming a laminate 10 on a support 20 (hereafter referred to as "laminate formation step"); a step of peeling the laminate 10 from the support 20 (hereafter referred to as "peeling step"); and a step of grinding the peeled laminate 10 (hereafter referred to as "grinding step").

The first production method may optionally include: a step of forming a release layer on the support before the laminate formation step; a step of forming a surface treatment layer on at least part of the surface of the laminate before, after, or during the grinding step; and a step of classifying the ground laminate or the formed flat pigment particles. These optional steps are not illustrated in FIG. 5.

In the laminate formation step in the first production method, a dielectric layer and a metallic thin film layer are stacked alternately on at least one side (upper side in FIG. 5) of the support, to form a laminate. The laminate may be formed on both sides of the support according to need.

The material of the support is, for example, a polymer material or an inorganic material used for supports. The material may be either a transparent material or a non-transparent material. These materials may be used alone or in combination of two or more.

Examples of the polymer material include resin films such as polyolefin films (polyethylene, polypropylene, etc.), polyester films (polyethylene terephthalate, polyethylene naphthalate, etc.), polyvinyl chloride, cellulose triacetate, and water-soluble films (starch, gelatin, cellulose derivatives or cellulose polymers such as carboxymethyl cellulose (CMC) and methyl cellulose (MC), polyvinyl alcohol (PVA), polyacrylic acid polymer, polyacrylamide (PAM), polyethylene oxide (PEO)).

The inorganic material is, for example, a metallic material or a non-metallic material.

Examples of the metallic material include various types of stainless steel (SUS), gold, platinum, silver, copper, nickel, cobalt, titanium, iron, aluminum, tin; and nickel-titanium (Ni-Ti) alloys, nickel-cobalt (Ni-Co) alloys, cobalt-chromium (Co-Cr) alloys, and zinc-tungsten (Zn-W) alloys.

Examples of the non-metallic material include inorganic compounds such as titanium dioxide, zinc oxide, aluminum oxide, zirconium oxide, silicon dioxide, tin oxide (IV), ITO, and ATO; glasses such as soda-lime silica glass and silica glass.

The inorganic material may be a metal-ceramic composite. Examples of the metal-ceramic composite include aluminum-silicon carbide composites and silicon-silicon carbide composites.

The thickness of the support is not limited, and may be adjusted as appropriate. For example, the thickness of the support may be 0.01 mm to 10 mm. The thickness of the support is preferably 0.05 mm to 5 mm. One support may be used alone, or two or more supports of different types or thicknesses may be stacked and put to use.

<Laminate formation step>

In the laminate formation step, the dielectric layer and the metallic thin film layer are stacked on the support by electron beam deposition (EB), chemical vapor deposition (CVD), sputtering, solution coating, ion plating, dipping, spraying, or the like, to form the laminate on the support. Of these, electron beam deposition (EB), chemical vapor deposition (CVD), sputtering, and solution coating are preferable. Regarding the stacking order, since the dielectric layer is the outermost layer of the laminate, typically the dielectric layer is formed on the support and then the metallic thin film layer and the dielectric layer are sequentially formed once or more.

<Peeling step>

In the peeling step, the laminate is peeled from the support. The peeling method is not limited, and may be a known peeling method. For example, in the case where a water soluble film is used as the support, the laminate can be peeled by immersing the support carrying the laminate in water to dissolve the water soluble film which is the support. In the case where the below-described release layer is provided on the surface of the support, the laminate can be peeled easily by the release layer. The laminate may be peeled from the support by immersing the support carrying the laminate in a water tank and applying ultrasound thereto.

<Grinding step>

In the grinding step, the laminate peeled from the support is ground to a desired size (maximum diameter). The grinding method may be a known grinding method for pigments and the like. Examples of the grinding method include mechanical grinding using a grinder, and wet grinding and dry grinding using a vibration mill, a ball mill, a jet mill, or an ultrasonic homogenizer. The average maximum diameter of the laminate can be adjusted by adjusting input energy in the grinding method. For example, in the case of mechanical grinding, the device output or the grinding time may be adjusted. In the case of grinding using an ultrasonic homogenizer, the device output, the amplitude, or the grinding time may be adjusted. In the case of grinding using an ultrasonic homogenizer, the device output may be adjusted in a range of 15 W to 240 W, the amplitude may be adjusted in a range of 10 $\mu$m to 60 $\mu$m, and the grinding time may be adjusted in a range of 30 sec to 3600 sec.

The solvent in wet grinding is not limited as long as it does not dissolve the constituents of the laminate. Examples of the solvent include water; alcohols such as methanol, ethanol, isopropanol, n-butyl alcohol, t-butyl alcohol, and ethylene glycol; ketones such as acetone and methyl ethyl ketone; esters such as ethyl acetate; halides such as chloroform and methylene chloride; aliphatic hydrocarbons such as butane and hexane; ethers such as tetrahydrofuran (THF), butyl ether, and dioxane; aromatic hydrocarbons such as benzene, xylene, and toluene; and amides such as N,N-dimethylformamide (DMF) and dimethylacetamide (DMAc). These solvents may be used alone or in combination of two or more. The laminate may be ground using ultrasound.

In the case of dry grinding, the laminate may be cooled by liquid nitrogen or the like and then ground.

Without the below-described surface treatment layer formation step, the ground laminate obtained as a result of the grinding step is the flat pigment particles.

<Optional steps in first production method>

The first production method may optionally include a step of forming a release layer on the support before the laminate formation step, as mentioned above. In the release layer formation step, for example, a release layer of acrylic resin as raw material is formed on the surface of the support before the laminate formation step. The release layer formation method may be a conventionally known method such as the method described in PTL 1. Forming the release layer on the surface of the support eases peeling of the laminate from the support in the subsequent peeling step.

The first production method may optionally include a step of classifying the ground laminate or the formed flat pigment particles. The classification method is not limited, and may be a conventionally known classification method. For example, a classification method using the classifier described in PTL 1 may be used.

The first production method may optionally include a step of forming a surface treatment layer on at least part of the surface of the laminate before, after, or during the grinding step. In one embodiment, the first production method includes a step of forming a surface treatment layer on at least part of the surface of the laminate after the grinding step.

The surface treatment layer formation method may be a conventionally known method. Examples include neutralization hydrolysis process, sol-gel process, and thermolysis process. With these methods, the surface treatment layer can be uniformly formed even on the end surfaces of the laminate (the surfaces in the thickness direction of the laminate).

A specific example of neutralization hydrolysis process is as follows: The ground laminate is dispersed in distilled water to prepare a slurry, and a sodium aluminate aqueous solution is added to the slurry. During the addition of the sodium aluminate aqueous solution, sulfuric acid is added to maintain the pH of the slurry at about 6.5. After adding the sodium aluminate aqueous solution, the slurry is filtered and washed with water. Thus, a surface treatment layer made of aluminum oxide can be formed on the surface of the laminate.

A specific example of sol-gel process is as follows: A solution of an organometallic compound is hydrolyzed and polycondensated to form a sol, followed by gelling. After this, heating is performed. Thus, a surface treatment layer made of metallic oxide can be formed on the surface of the laminate.

<Second production method>

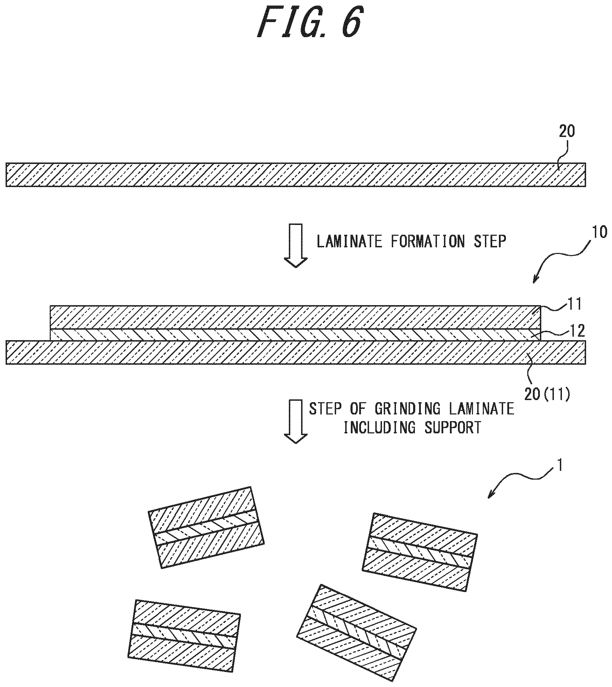

FIG. 6 is a schematic diagram illustrating the second production method as another example of the flat pigment particle production method. The second production method includes: a laminate formation step; and a step of grinding the laminate 10 including the support 20, as illustrated in FIG. 6. The second production method is different from the first production method in that the support 20 is part of the flat pigment particles 1. In the example in FIG. 6, the support 20 functions as the dielectric layer 11 of the laminate 10.

<Laminate formation step>

In the laminate formation step, one or more layers from among the dielectric layer and the metallic thin film layer are stacked on the support to form the laminate. As the support in the second production method, a transparent material from among the support materials listed with regard to the first production method is used.

In the case where the support forms the dielectric layer of the laminate, the material of the support may be the material of the dielectric layer described above. In the case where the support forms the metallic thin film layer of the laminate, the material of the support may be the material of the metallic thin film layer described above.

Whether the support forms the dielectric layer or the metallic thin film layer of the laminate, in the laminate formation step one or more layers from among the dielectric layer and the metallic thin film layer are stacked on one side or both sides of the support so that the outermost layer of the resultant laminate is the dielectric layer.

<Step of grinding laminate including support>

The second production method includes a step of grinding the laminate including the support. The grinding method may be the same as the method described with regard to the first production method.

<Optional steps in second production method>

The second production method need not include a step of forming a release layer on the support because the support forms any of the dielectric layer and the metallic thin film layer of the laminate, but may include a step of forming a release layer on the support according to need. The method of forming a release layer on the support is the same as that described with regard to the first production method.

The second production method may optionally include: a step of classifying the ground laminate or the formed flat pigment particles; and a step of forming a surface treatment layer on at least part of the surface of the laminate before, after, or during the grinding step, as in the first production method. These steps are the same as those in the first production method, and accordingly their description is omitted.

<Surface tension adjustment layer>

The surfaces of the flat pigment particles may be optionally coated with a surface tension adjustment layer. The surface tension adjustment layer is provided on at least part of the surfaces of the flat pigment particles, and may be provided on the whole surfaces of the flat pigment particles.

The material of the surface tension adjustment layer may be selected as appropriate from known materials based on the function of the surface tension adjustment layer. Examples of the material of the surface tension adjustment layer include stearic acid, oleic acid, phosphonic acid, and phosphate. These surface tension adjustment layer materials may be used alone or in combination of two or more.

The amount of the material of the surface tension adjustment layer may be adjusted as appropriate based on the function of the surface tension adjustment layer. For example, the amount of the surface tension adjustment layer may be 0.01 parts to 10 parts by mass per 100 parts by mass of the flat pigment particles, and is preferably 0.1 parts to 3 parts by mass per 100 parts by mass of the flat pigment particles.

The thickness of the surface tension adjustment layer may be adjusted as appropriate based on the function of the surface tension adjustment layer. For example, the thickness of the surface tension adjustment layer may be 0.1 nm to 10 nm. The thickness of the surface tension adjustment layer is preferably 0.1 nm to 5 nm, and more preferably 0.1 nm to 2 nm.

The surface tension adjustment layer formation method may be a conventionally known method. For example, the flat pigment particles are blended into a solution containing stearic acid and petroleum distillates, and dispersed using an ultrasonic bath. After this, the dispersoid is subjected to suction filtration, washed with a solvent, and then dried. The surface tension adjustment layer can thus be formed on the flat pigment particles.

<Resin component>

The resin component functions as a coating film formation element. The resin component may be a conventionally known resin component of a coating composition. Examples of the resin component include acrylic resin, polyester resin, alkyd resin, fluororesin, epoxy resin, polyurethane resin, and polyether resin described in PTL 1. The resin component may be, for example, a polymer compound containing or composed of an inorganic component such as silicone resin or an alkoxysilane condensate. These resin components may be used alone or in combination of two or more.

The resin component has two types, i.e. curing type and lacquer type, which may be used alone or in combination.

A resin component of curing type is used in mixture with a cross-linker such as amino resin, a (blocked) polyisocyanate compound, amine system, polyamide system, polycarboxylic acid, or polyacrylate. In a resin component of curing type, the cross-linker may be used as the resin component. A resin component of curing type can be cured by heating or at normal temperature. A resin component of curing type may be used in mixture with a curing catalyst according to need.

<Other components>

The coating composition may comprise, besides the flat pigment particles and the resin component, other components such as a solvent, an anti-sagging agent, a viscosity modifier, an anti-settling agent, a crosslinking accelerator, a curing agent, a leveling agent, a surface modifier, a defoaming agent, a plasticizer, a preservative, an antifungal agent, and an ultraviolet light stabilizer. These components may each be used alone or in combination of two or more.

The solvent may be selected as appropriate from conventionally known coating composition solvents. Examples of the solvent include alcohols such as methanol, ethanol, 2-propanol, and 1-butanol; esters such as ethyl acetate, butyl acetate, isobutyl acetate, ethyl propionate, ethylene glycol monomethyl ether acetate, propylene glycol monomethyl ether acetate, and propylene glycol monoethyl ether acetate; ethers such as diethyl ether, propylene glycol monomethyl ether, ethylene glycol monomethyl ether, ethylene glycol monoethyl ether, dioxane, and tetrahydrofuran (THF); glycols such as ethylene glycol, diethylene glycol, propylene glycol, dipropylene glycol, 1,3-butylene glycol, pentamethylene glycol, and 1,3-octylene glycol; amides such as formamide, N-methylformamide, dimethylformamide (DMF), dimethylacetamide, dimethyl sulfoxide (DMSO), and N-methylpyrrolidone (NMP); ketones such as acetone, methyl ethyl ketone (MEK), methyl propyl ketone, methyl isobutyl ketone, acetylacetone, and cyclohexanone; aromatic hydrocarbons such as toluene, xylene, mesitylene, and dodecyl benzene; and halogenated solvents such as chloroform and dichloromethylene.

<Coating composition preparation method>

The coating composition preparation method is not limited, and the coating composition may be prepared by mixing the above-described flat pigment particles, resin component, and other optional components by a conventionally known method. In the case where, after obtaining the value of the water surface diffusion coverage area of the flat pigment particles by the below-described method, the coating film specific gravity, the film thickness, and the below-described pigment surface density of the coating film to be formed is assumed beforehand, for example, the pigment surface density of the coating film can be easily adjusted to a desired value by adjusting the pigment mass concentration depending on the water surface diffusion coverage area in the preparation of the coating composition.

<Coating film production method>

The coating film production method is not limited as long as the coating film is formed on a target surface using the coating composition so that the film thickness of the coating film will be 1 $\mu$m or more, and may be a conventionally known coating method. For example, the coating may be performed using an applicator, a barcoater, a brush, a spray, a roller, a roll coater, or a curtain coater. The drying temperature after the application of the coating composition may be adjusted as appropriate depending on the solvent and the like. For example, in the case where a quick drying such as 10 sec to 30 min is needed, the drying temperature may be 30 °C to 200 °C, and is preferably 40 °C to 160 °C. In the case where a quick drying is needed, two-pack type curing reaction or energy rays such as ultraviolet may be used. In the case where a quick drying is not needed, the drying temperature may be, for example, room temperature.

The film thickness of the coating film according to the present disclosure is 1 $\mu$m (1000 nm) or more. If the film thickness is less than 1 $\mu$m, high radio wave permeability cannot be obtained. The upper limit of the film thickness may be adjusted as appropriate depending on, for example, the desired infrared light reflectivity and visible light permeability. The film thickness is 3 $\mu$m (3000 nm) or more in one embodiment, and 15 $\mu$m (15000 nm) or more in another embodiment, and is 40 $\mu$m (40000 nm) or less in one embodiment, and 35 $\mu$m (35000 nm) or less in another embodiment. In one embodiment, the film thickness of the coating film is 1 $\mu$m to 40 $\mu$m (1000 nm to 40000 nm).

In terms of reducing the haze of the coating film, the film thickness of the coating film is preferably such a thickness that allows the flat pigment particles to be inside the coating film without protruding from the coating film surface. In view of this, the film thickness of the coating film is preferably 3 $\mu$m or more.

<Pigment surface density>

In the present disclosure, the pigment surface density in the coating film is 50 % to 300 %. As a result of the aspect ratio of the flat pigment particles being 400 or less and the pigment surface density of the coating film being 300 % or less, the coating film has high radio wave permeability. As a result of the aspect ratio of the flat pigment particles being 10 or more and the pigment surface density of the coating film being 50 % or more, the coating film has excellent infrared light reflectivity and visible light permeability.

The pigment surface density is 50 % or more in one embodiment, 75 % or more in another embodiment, and 150 % or more in yet another embodiment, and is 250 % or less in one embodiment.

The pigment surface density is the mass ratio (%) of the content of the flat pigment particles contained in the coating film to the content of the flat pigment particles that, in a state in which the flat pigment particles are arranged on a plane of a predetermined area without overlapping each other, sufficiently and not excessively cover the plane. Therefore, in the case where the pigment surface density is 100 %, the content of the flat pigment particles contained in the coating film is equal to the content of the flat pigment particles that sufficiently and not excessively cover the plane of the predetermined area without overlapping each other. Specifically, the pigment surface density is calculated from the following Formula (1):

$$\text{pigment surface density (\%)} = \text{water surface diffusion coverage area}$$
$$(\text{cm}^2/\text{g}) \times \text{pigment mass concentration (\%)} \times \text{coating film specific gravity}$$
$$(\text{g/cm}^3) \times \text{film thickness (cm)} \qquad \dots \text{Formula (1)}.$$

In Formula (1), the water surface diffusion coverage area ($\text{cm}^2/\text{g}$, WCA) is calculated by the method according to JIS K 5906: 1998. For example, the water surface diffusion coverage area can be increased by reducing the thicknesses of the flat pigment particles, and reduced by increasing the thicknesses of the flat pigment particles.

In Formula (1), the pigment mass concentration (%, PWC) is calculated from the following Formula (2) for the coating film per unit mass:

$$\text{pigment mass concentration (\%)} = \text{mass (g) of flat pigment particles} \times$$
$$100/(\text{mass (g) of coating film}) \qquad \dots \text{Formula (2)}$$

(Article)

An article according to the present disclosure includes the coating film described above. An article comprising a coating film that has high radio wave permeability and low haze in addition to excellent infrared light reflectivity and visible light permeability can thus be provided.

The target object, the target surface, or the coating target on which the coating film is formed is not limited as long as it is an object, a surface, or a target required to have infrared light reflectivity, visible light permeability, and radio wave permeability, and may be selected as appropriate. Examples of the target object, the target surface, or the coating target include interior and exterior of bodies of vehicles such as cars and railway vehicles, bodies of airplanes, bodies of ships, and superstructures (outfits); interior and exterior of buildings; furniture, fittings; window glasses of vehicles, airplanes, ships, and buildings; transparent bodies such as cases, containers, resin plates, and films made of glass, acrylic, or polycarbonate; housings and glass members of electronics such as displays, monitors, and refrigerators; and coating films thereof.

Examples of the article according to the present disclosure thus include vehicles such as cars and railway vehicles, airplanes, ships, buildings, furniture, fittings, window glass, transparent bodies, and electronics.

EXAMPLES

More detailed description will be given below by way of examples. These examples are, however, intended for illustrative purposes only, and not intended to limit the scope of the present disclosure in any way.

As the support in the laminate formation step, a glass plate of 50 mm × 50 mm × 2 mm produced by TP Giken Corporation was used.

As the acrylic resin forming the release layer, ACRYDIC® (ACRYDIC is a registered trademark in Japan, other countries, or both) A-1371 produced by DIC Corporation was used.

The dielectric layer and the metallic thin film layer were formed using vacuum deposition equipment EX-200 produced by ULVAC, Inc. The film thicknesses were controlled using quartz crystal deposition controller CRTM-6000G produced by ULVAC, Inc.

As the acrylic resin which is the resin component of the coating composition, ACRYDIC® (ACRYDIC is a registered trademark in Japan, other countries, or both) A-322 produced by DIC Corporation was used.

As the ultrasonic device, ultrasonic homogenizer US-600T produced by NISSEI Corporation was used.

The surface resistivity was measured using super megohm meter SM-8220 produced by Hioki E. E. Corporation.

The visible light transmittance and the solar heat gain coefficient were measured using spectrophotometer UV-3600 produced by Shimadzu Corporation.

The haze was measured using a haze meter (model number NDH 2000) produced by Nippon Denshoku Industries Co., Ltd.

(Example 1)

Flat pigment particles were produced by the first production method as follows.

The acrylic resin (A-1371) forming the release layer was prepared to be in a concentration of 10 mass% (in terms of solid content), using butyl acetate. The resultant acrylic resin solution was applied to one side of the support with a spin coater to a dry film thickness of 1 $\mu$m, and then dried at 80 °C for 15 min, to form a release layer on one side of the support.

A dielectric layer ($TiO_2$ layer) with a film thickness of 32.5 nm as the first layer, a metallic thin film layer (Ag layer) with a film thickness of 15 nm as the second layer, and a dielectric layer ($TiO_2$ layer) with a film thickness of 32.5 nm as the third layer were stacked alternately on the release layer by electron beam deposition using the vacuum deposition equipment, to form a laminate having a thickness of 80 nm.

The support with the obtained laminate was immersed in acetone for 30 min to dissolve the release layer, thus peeling the laminate from the support. After removing the support, the acetone containing the laminate was subjected to ultrasonic treatment, to grind the laminate. The acetone containing the ground laminate was then left to stand for 1 hr. After this, the supernatant was removed by decantation, and the result was dried under reduced pressure for one night using a vacuum desiccator. Without forming the surface treatment layer and the surface tension adjustment layer, the resultant laminate was used as flat pigment particles. The maximum diameters of 100 flat pigment particles obtained were measured using laser microscope VK-X 250 produced by Keyence Corporation and averaged. The average maximum diameter was 1000 nm. Moreover, the average thickness of the flat pigment particles was 80 nm according to film thickness control during laminate production. From these values, the aspect ratio was calculated at 12.5.

The water surface diffusion coverage area ($cm^2/g$) of the obtained flat pigment particles calculated by the method according to JIS K 5906: 1998 was 24000 $cm^2/g$.

(Preparation of coating composition)

The obtained flat pigment particles and ethyl acetate as a solvent were mixed and stirred to form a slurry. The acrylic resin (A-322) which is the resin component was then added to the slurry, with the pigment mass concentration being adjusted so that the pigment surface density when forming a coating film with a coating film specific gravity of 1.3 $g/cm^3$ and a film thickness of 3 $\mu$m ($3 \times 10^{-4}$ cm) would be 150 %, and the mixture was stirred to obtain a coating composition having a coating solid content of 40 mass%.

(Formation of coating film)

The obtained coating composition was applied onto a glass plate using barcoater #10 to a dry film thickness of 3 $\mu$m, and then left to stand at room temperature for 10 min and subsequently dried at 110 °C for 15 min, to obtain a coating film having a film thickness of 3 $\mu$m.

(Examples 2 to 21 and Comparative Examples 1 to 6)

Flat pigment particles were produced and a coating film was obtained in the same way as Example 1, except that the layer materials, layer structure, layer film thicknesses, and aspect ratio of the laminate (flat pigment particles) and the film thickness and pigment surface density of the coating film were changed from Example 1 as shown in Table 1. As the silver alloy in Example 7, a silver-indium-based alloy was used.

(Evaluation of coating film)

The radio wave permeability, visible light permeability, infrared light reflectivity, and haze of the coating film of each of Examples and Comparative Examples were evaluated as follows. The results are shown in Table 1.

<Radio wave permeability>

For the obtained coating film, the surface resistivity was measured using the above-mentioned super megohm meter SM-8220 in an environment of 23 °C and 50 % with an applied voltage of 100 V, and the radio wave permeability was evaluated based on the following criteria. Evaluation 3 indicates the best radio wave permeability, evaluation 2 and evaluation 3 correspond to pass, and evaluation 1 corresponds to fail:

evaluation 1: surface resistivity of less than $1.0 \times 10^{10}$ Ω/□
evaluation 2: surface resistivity of $1.0 \times 10^{10}$ Ω/□ or more and less than $1.0 \times 10^{11}$ Ω/□
evaluation 3: surface resistivity of $1.0 \times 10^{11}$ Ω/□ or more.

<Visible light permeability and infrared light reflectivity>

For the obtained coating film, the visible light transmittance and the solar heat gain coefficient were measured according to JIS-R3106: 1998 "Testing method on transmittance, reflectance and emittance of flat glasses and evaluation of solar heat gain coefficient", and the heat insulation coefficient was calculated from the following Formula (3) using the measured solar heat gain coefficient. The visible light permeability and the infrared light reflectivity were evaluated based on the following criteria. Evaluation 3 indicates the best visible light permeability or infrared light reflectivity, evaluation 2 and evaluation 3 correspond to pass, and evaluation 1 corresponds to fail:

$$\text{heat insulation coefficient} = \text{solar heat gain coefficient}/0.88$$

$$\dots \text{Formula (3)}.$$

Visible light permeability

evaluation 1: visible light transmittance of less than 60 %
evaluation 2: visible light transmittance of 60 % or more and less than 70 %
evaluation 3: visible light transmittance of 70 % or more.

Infrared light reflectivity

evaluation 1: heat insulation coefficient of more than 0.8
evaluation 2: heat insulation coefficient of more than 0.7 and 0.8 or less
evaluation 3: heat insulation coefficient of 0.7 or less.

<Haze>

For the obtained coating film, the haze was measured using the above-mentioned haze meter. The haze was evaluated based on the following criteria. Evaluation 3 indicates the lowest haze, evaluation 2 and evaluation 3 correspond to pass, and evaluation 1 corresponds to fail:

evaluation 1: haze value of more than 7 %
evaluation 2: haze value of more than 5 % and 7 % or less
evaluation 3: haze value of 5 % or less.

Table 1

| | | Example | | | | | | | | | | | | | | | | | | | | Comparative Example | | | | | |
| --- | --- | --- | --- | --- | --- | --- | --- | --- | --- | --- | --- | --- | --- | --- | --- | --- | --- | --- | --- | --- | --- | --- | --- | --- | --- | --- | --- | --- |
| | | 1 | 2 | 3 | 4 | 5 | 6 | 7 | 8 | 9 | 10 | 11 | 12 | 13 | 14 | 15 | 16 | 17 | 18 | 19 | 20 | 21 | 1 | 2 | 3 | 4 | 5 | 6 |
| Flat pigment particles — Laminate — First layer (dielectric layer) | Material type | $TiO_2$ | $TiO_2$ | $TiO_2$ | $TiO_2$ | $TiO_2$ | $TiO_2$ | $TiO_2$ | $TiO_2$ | $TiO_2$ | $TiO_2$ | $TiO_2$ | ITO | ITO | ZnO | ZnO | ITO | $TiO_2$ | $TiO_2$ | $Nb_2O_5$ | $CeO_2$ | $TiO_2$ | $TiO_2$ | $TiO_2$ | $TiO_2$ | $TiO_2$ | ITO | ITO |
| | Film thickness (nm) | 32.5 | 32.5 | 32.5 | 32.5 | 30 | 32.5 | 32.5 | 32.5 | 32.5 | 15 | 20 | 40 | 18 | 40 | 20 | 20 | 32.5 | 15 | 32.5 | 35 | 32.5 | 32.5 | 32.5 | 32.5 | 15 | 20 | 20 |
| Second layer (metallic thin film layer) | Material type | Ag | Ag | Ag | Ag | Ag | Al | Ag alloy | Ag | Ag | Ag | Ag | Ag | Ag | Ag | Ag | Ag | Ag | Ag | Ag | Ag | Ag | Ag | Ag | Ag | Ag | Ag | Ag |
| | Film thickness (nm) | 15 | 15 | 15 | 15 | 15 | 15 | 15 | 15 | 15 | 10 | 15 | 15 | 12 | 15 | 10 | 10 | 15 | 8 | 15 | 15 | 15 | 15 | 15 | 15 | 10 | 15 | 15 |
| Third layer (dielectric layer) | Material type | $TiO_2$ | $TiO_2$ | $TiO_2$ | $TiO_2$ | $TiO_2$ | $TiO_2$ | $TiO_2$ | $TiO_2$ | $TiO_2$ | $TiO_2$ | $TiO_2$ | ITO | ITO | ZnO | ZnO | $TiO_2$ | $TiO_2$ | $TiO_2$ | $Nb_2O_5$ | $CeO_2$ | $TiO_2$ | $TiO_2$ | $TiO_2$ | $TiO_2$ | $TiO_2$ | ITO | ITO |
| | Film thickness (nm) | 32.5 | 32.5 | 32.5 | 32.5 | 30 | 32.5 | 32.5 | 32.5 | 32.5 | 30 | 20 | 40 | 36 | 40 | 40 | 20 | 25 | 30 | 32.5 | 35 | 32.5 | 32.5 | 32.5 | 32.5 | 30 | 20 | 20 |
| Fourth layer (metallic thin film layer) | Material type | | | | | | | | | | Ag | | | Ag | | Ag | | | Ag | | | | | | | Ag | | |
| | Film thickness (nm) | | | | | | | | | | 10 | | | 12 | | 10 | | | 8 | | | | | | | 10 | | |
| Fifth layer (dielectric layer) | Material type | | | | | | | | | | $TiO_2$ | | | ITO | | ZnO | | | $TiO_2$ | | | | | | | $TiO_2$ | | |
| | Film thickness (nm) | | | | | | | | | | 15 | | | 18 | | 20 | | | 15 | | | | | | | 15 | | |
| Sixth layer (metallic thin film layer) | Material type | | | | | | | | | | | | | | | | | | | | | | | | | Ag | | |
| | Film thickness (nm) | | | | | | | | | | | | | | | | | | | | | | | | | 10 | | |
| Total number of layers of laminate | | 3 | 3 | 3 | 3 | 3 | 3 | 3 | 3 | 3 | 5 | 3 | 3 | 5 | 3 | 5 | 3 | 3 | 5 | 3 | 3 | 3 | 3 | 3 | 3 | 6 | 3 | 3 |
| Surface treatment layer | Material type | | | | | $SiO_2$ | | | | | | | | | | | | | | | | | | | | | | |
| | Film thickness (nm) | | | | | 2.5 | | | | | | | | | | | | | | | | | | | | | | |
| Average maximum diameter of pigment particles (nm) | | 1000 | 10000 | 10000 | 10000 | 10000 | 10000 | 10000 | 10000 | 20000 | 10000 | 20000 | 10000 | 10000 | 10000 | 10000 | 10000 | 10000 | 10000 | 10000 | 10000 | 6000 | 10000 | 10000 | 10000 | 10000 | 270 | 31100 |
| Average thickness of pigment particles (nm) | | 80 | 80 | 80 | 80 | 80 | 80 | 80 | 80 | 80 | 80 | 55 | 95 | 96 | 95 | 100 | 50 | 72.5 | 76 | 80 | 85 | 80 | 80 | 80 | 80 | 90 | 55 | 55 |
| Aspect ratio of pigment particles | | 12.5 | 125 | 125 | 125 | 125 | 125 | 125 | 125 | 250 | 125 | 364 | 105 | 104 | 105 | 100 | 200 | 138 | 132 | 125 | 118 | 75 | 125 | 125 | 125 | 111 | 4.9 | 565 |
| Coating film | Film thickness (μm) | 3 | 3 | 35 | 15 | 15 | 15 | 15 | 15 | 15 | 15 | 15 | 15 | 15 | 15 | 15 | 15 | 15 | 15 | 15 | 15 | 35 | 0.5 | 15 | 15 | 15 | 15 | 15 |
| | Pigment surface density (%) | 150 | 150 | 150 | 75 | 75 | 75 | 75 | 250 | 150 | 150 | 150 | 150 | 150 | 150 | 150 | 150 | 150 | 150 | 75 | 75 | 150 | 150 | 30 | 400 | 150 | 150 | 150 |
| Evaluation | Radio wave permeability | 3 | 3 | 3 | 3 | 3 | 3 | 3 | 2 | 3 | 3 | 2 | 3 | 3 | 3 | 3 | 3 | 3 | 3 | 3 | 3 | 3 | 1 | 3 | 1 | 3 | 3 | 1 |
| | Visible light permeability | 3 | 3 | 3 | 3 | 3 | 2 | 3 | 2 | 3 | 2 | 3 | 3 | 2 | 3 | 2 | 3 | 2 | 2 | 2 | 2 | 2 | 2 | 1 | 2 | 3 | 1 | 2 |
| | Infrared light reflectivity | 2 | 2 | 2 | 2 | 2 | 2 | 2 | 3 | 2 | 3 | 2 | 2 | 3 | 2 | 3 | 2 | 2 | 2 | 2 | 2 | 2 | 2 | 3 | 3 | 2 | 1 | 3 |
| | Haze | 2 | 3 | 3 | 3 | 3 | 3 | 3 | 3 | 3 | 3 | 3 | 2 | 3 | 2 | 3 | 3 | 3 | 3 | 3 | 3 | 3 | 2 | 3 | 3 | 2 | 1 | 3 |

Comparison between Example 2 and Comparative Examples 2 and 3 and comparison between Example 11 and Comparative Examples 5 and 6 revealed the following: Even with use of flat pigment particles of the same layer structure, in Comparative Examples 2, 3, 5, and 6 in which the aspect ratio of the flat pigment particles or the pigment surface density in the coating film was outside the predetermined range, the infrared light reflectivity was low or the radio wave permeability was low. In Examples such as Examples 2 and 11 in which the aspect ratio of the flat pigment particles and the pigment surface density in the coating film were each in the predetermined range, a coating film having not only excellent infrared light reflectivity and visible light permeability but also high radio wave permeability was obtained. Moreover, in each Example, the haze of the coating film was low.

REFERENCE SIGNS LIST

- 1    flat pigment particle
- 10    laminate
- 11    dielectric layer
- 12    metallic thin film layer
- 13    surface treatment layer
- 14    surface tension adjustment layer
- 20    support

INDUSTRIAL APPLICABILITY

It is therefore possible to provide a coating film that has high radio wave permeability and low haze in addition to excellent infrared light reflectivity and visible light permeability, and an article comprising such a coating film.

**Claims**

1. A coating film produced using a coating composition,
   wherein the coating composition comprises flat pigment particles and a resin component,
   the flat pigment particles comprise a laminate of dielectric layers and a metallic thin film layer,
   the dielectric layers and the metallic thin film layer are stacked alternately in the laminate, and the dielectric layers are outermost layers of the laminate,
   an aspect ratio of the flat pigment particles is 75 to 370, the aspect ratio being calculated by dividing an average maximum diameter of the flat pigment particles by an average thickness of the flat pigment particles,
   a pigment surface density of the flat pigment particles in the coating film is 75 % to 250 %, and
   a film thickness of the coating film is 1 $\mu$m to 35 $\mu$m.

2. The coating film according to claim 1,
   wherein the average maximum diameter of the flat pigment particles is 1000 nm or more.

3. The coating film according to claim 1 or 2,
   wherein a thickness of the laminate is 30 nm to 115 nm.

4. The coating film according to any one of claims 1 to 3,
   wherein a thickness of the laminate is 50 nm to 100 nm.

5. An article comprising the coating film according to any one of claims 1 to 4.

**Patentansprüche**

1. Beschichtungsfilm, hergestellt unter Verwendung einer Beschichtungszusammensetzung,
   wobei die Beschichtungszusammensetzung flache Pigmentpartikel und eine Harzkomponente umfasst,
   die flachen Pigmentpartikel ein Laminat aus dielektrischen Schichten und einer metallischen Dünnfilmschicht umfassen,
   die dielektrischen Schichten und die metallische Dünnfilmschicht im Laminat abwechselnd gestapelt sind, und die dielektrischen Schichten äußerste Schichten des Laminats sind,
ein Aspektverhältnis der flachen Pigmentpartikel 75 bis 370 beträgt, wobei das Seitenverhältnis berechnet wird, indem ein mittlerer maximaler Durchmesser der flachen Pigmentpartikel durch eine mittlere Dicke der flachen Pigmentpartikel geteilt wird,
eine Pigmentoberflächendichte der flachen Pigmentpartikel im Beschichtungsfilm 75 % bis 250 % beträgt, und
eine Filmdicke des Beschichtungsfilms 1 μm bis 35 μm beträgt.

**2.** Beschichtungsfilm nach Anspruch 1,
wobei der mittlere maximale Durchmesser der flachen Pigmentpartikel 1000 nm oder mehr beträgt.

**3.** Beschichtungsfilm nach Anspruch 1 oder 2,
wobei eine Dicke des Laminats 30 nm bis 115 nm beträgt.

**4.** Beschichtungsfilm nach einem der Ansprüche 1 bis 3,
wobei eine Dicke des Laminats 50 nm bis 100 nm beträgt.

**5.** Artikel, umfassend den Beschichtungsfilm nach einem der Ansprüche 1 bis 4.

**Revendications**

**1.** Film de revêtement produit en utilisant une composition de revêtement,
dans lequel la composition de revêtement comprend des particules de pigment plates et un composant résine,
les particules de pigment plates comprennent un stratifié de couches diélectriques et d'une couche de film mince métallique,
les couches diélectriques et la couche de film mince métallique sont empilées en alternance dans le stratifié, et les couches diélectriques sont les couches les plus externes du stratifié,
un rapport d'aspect des particules de pigment plates est de 75 à 370, le rapport d'aspect étant calculé en divisant un diamètre maximal moyen des particules de pigment plates par une épaisseur moyenne des particules de pigment plates,
une densité de surface de pigment des particules de pigment plates dans le film de revêtement est de 75 % à 250 %, et
une épaisseur de film du film de revêtement est de 1 μm à 35 μm.

**2.** Film de revêtement selon la revendication 1,
dans lequel le diamètre maximal moyen des particules de pigment plates est de 1000 nm ou plus.

**3.** Film de revêtement selon la revendication 1 ou 2,
dans lequel une épaisseur du stratifié est de 30 nm à 115 nm.

**4.** Film de revêtement selon l'une quelconque des revendications 1 à 3,
dans lequel une épaisseur du stratifié est de 50 nm à 100 nm.

**5.** Article comprenant le film de revêtement selon l'une quelconque des revendications 1 à 4.

## FIG. 1

## FIG. 2

## FIG. 3

## FIG. 4

# FIG. 5

20

LAMINATE FORMATION STEP

10    20

PEELING STEP

10

GRINDING STEP

1

# *FIG. 6*

20

⬇ LAMINATE FORMATION STEP

10

11

12

20 (11)

⬇ STEP OF GRINDING LAMINATE
INCLUDING SUPPORT

1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016006664 A1
- WO 0069975 A1
- JP 2002004031 A
- WO 2015111095 A1